# EUROPEAN PATENT SPECIFICATION

(11) **EP 3 964 817 B1**
(45) Date of publication and mention of the grant of the patent: **04.01.2023**
(21) Application number: 21191665.5
(22) Date of filing: 17.08.2021
(51) Int. Cl.: G01N 1/06, G01N 1/36, G06K 9/00, G06T 7/00, G01N 35/04

(54) **DEVICE AND METHOD FOR THE AUTOMATIC INSERTION OF A REFERENCE MATERIAL DURING THE PROCESSING OF A BIOLOGICAL SAMPLE**
VORRICHTUNG UND VERFAHREN ZUM AUTOMATISCHEN EINSETZEN EINES REFERENZMATERIALS WÄHREND DER BEARBEITUNG EINER BIOLOGISCHEN PROBE
DISPOSITIF ET PROCÉDÉ POUR L'INSERTION AUTOMATIQUE D'UN MATÉRIAU DE RÉFÉRENCE PENDANT LE TRAITEMENT D'UN ÉCHANTILLON BIOLOGIQUE

(30) Priority: 03.09.2020 IT 202000020974
(43) Date of publication of application: 09.03.2022
(73) Proprietor: Inpeco SA, 6883 Novazzano (CH)
(72) Inventor: PEDRAZZINI, Gianandrea, 6900 Paradiso (CH); RICOTTI, Leonardo, 56037 Peccioli (Pisa) (IT); POLIZIANI, Aliria, 55041 Capezzano Pianore (Lucca) (IT); CIANCIA, Sabrina, 85042 Lagonegro (Potenza) (IT); VANNOZZI, Lorenzo, 56024 San Miniato (Pisa) (IT)
(74) Representative: Notaro, Giancarlo

(56) References cited:
- WO-A1-2017/040671
- WO-A2-2006/031342

## Description

### Field of the invention

The present invention relates to a device for processing a biological sample hosted on a support, wherein the biological sample comprises at least one biological tissue included in a block of containment material, the device being of the type comprising:
- an image acquisition system comprising an optical detector for acquiring at least one image of the biological sample,
- an automated transport line comprising an automatic conveyor defining a transport surface on which the support of the biological sample is transported, in order to advance the support hosting the biological sample towards the image acquisition system,
- an electronic processing unit associated with the image acquisition system and programmed to receive and process a first signal emitted by the optical detector and indicative of the acquired biological sample image, and
- an electronic controller configured to receive a second signal emitted by the electronic processing unit.

### Prior Art

Anatomical pathology is a branch of medicine dedicated to the study of human diseases through a macroscopic analysis of the organs or microscopic analysis of the tissues.

An anatomical pathology laboratory usually differs from traditional medicine laboratories because it shows a clear separation between the various areas, in each of which a specific phase of the process of preparation, and later of real analysis, of each sample takes place. The separation between one phase and another is therefore quite clear, as is the difference in duties and the high level of specialization of each operator.

Limiting the following discussion to the microscopic analysis of biological tissues, previously taken from a patient for example by biopsy and which are supposed to be transported at the laboratory entrance according to any of the known procedures, a particularly important phase is that of *"embedding"*, in which a containment material, for example paraffin, is poured into a support containing the portion of the tissue. Paraffin is a particular type of wax which, following an appropriate subsequent cooling, solidifies, thus facilitating the cutting operation of thin sections of tissue made later using a special tool, such as a microtome.

Each of these thin sections is then mounted on a laboratory glass *(slide)*, possibly coloured *("staining")* and finally undergoes microscopic analysis.

The various tissue sections are manually positioned one by one on the respective laboratory slide, by an operator, for example through a pair of tweezers or a brush. This has two important consequences. Firstly, due to the thinness, each of said sections is extremely delicate and during the manual operation of transfer on the laboratory slide it can undergo deformations of various kinds, for example a compression, an elongation, a folding, an overturning or a combination of the same. Secondly, the orientation that each of the biological tissue sections assumes once positioned on the laboratory slide is extremely variable, so they are rotated relative to each other. This is particularly problematic because if a pathologist finds an alteration, for example a tumor cell, within a section of tissue, he would undoubtedly have an interest in investigating other sections of the same tissue in order to reconstruct, within the same, the possible evolution of a disease. Due to the problems of deformations and/or relative rotations described above, such operations would become particularly complicated.

A known possibility of overcoming this problem is to insert within the block of containment material, in a phase prior to the sectioning of the sample with the microtome, a reference material *("fiducial marker")* which substantially acts as an origin of a reference system by which to be able to relate the different sections of biological tissue to each other, regardless of their relative rotation. Basically, it is identified a portion inside the block of containment material where there is no biological tissue, at which a removal operation *("punching")* of a volume, typically cylindrical, of this containment material is carried out, for example through a syringe with a hollow needle pushed by a piston. The portion of the sample left empty is then filled with the insertion *("indexing")* of an identical volume of another material that acts as a reference, so as to appear clearly visible even later, on each of the tissue sections obtained by means of the use of the microtome.

It is understood that the shape of the inserted reference material can also be different from the cylindrical one, for example it can be characterized by a square, star, L-shaped base, or of any other known type. Furthermore, the nature of the material of which the reference is composed can be of various types: experimentally, the most used are natural polymers, such as agarose or chitosan, as well as some types of resins or synthetic polymers, such as polyacrylamide. It can also be envisaged the use of more than one reference material within the same block of containment material, to ensure an even greater precision and therefore a greater comparability between the various tissue sections obtained. Indeed, this basically corresponds to fixing different points of origin of the above-mentioned reference system.

Patents WO2006/031342 A2, WO2017/040671 A1 and WO2017/100373 A2 each include one or more of the features set forth above.

It is also necessary, in an initial phase or in any case prior to sectioning with the microtome, to acquire an image of the block of containment material with the biological tissue included within it, for example by means of a camera and possibly a lighting device, to facilitate the localization of a portion of the block where there is no biological tissue and which is therefore particularly suitable for the operation of removal of a volume of containment material for the following insertion of an identical volume of reference material.

Patent WO2018/094290 A1 and the article "Tissue arrays as fiducial markers for section alignment in 3-D reconstruction technology" (Bussolati et al., J. Cell. Mol. Med. 2005, 9 (2): 438-445 ) illustrate solutions wherein an initial acquisition system of the image of the block of containment material not yet sectioned is used, which allows to discriminate in advance the portions where there is no biological tissue and therefore to proceed with the removal of a volume of containment material at a portion of the block which is substantially pre-programmed. Furthermore, in the article cited above, a particular technique called "Tissue Microarray" is used which consists in the insertion of a reference material consisting of biological tissue - different from the biological tissue to be analyzed - instead of one of the above-mentioned materials.

However, while using an image acquisition system of the block, the identification of the precise portion wherein to actually remove a volume of containment material is still left to the operator in these cases. The dimensions of biological tissue included in the containment material vary indeed from case to case (in shape, size, orientation) and therefore the exact point in which to carry out such operation cannot always be the same. Obviously, the acquisition of the image helps the operator to identify the portion where there is no biological tissue, wherein the operation can be carried out, but the final decision on the precise point in which to make the removal of the volume of containment material is taken in a sense immediately by the operator himself. This situation may lead to errors in doing the operation.

### Object of the invention

The object of the present invention is to overcome the aforementioned drawbacks, implementing in particular a device of the type indicated at the beginning of this description, wherein the risk of lapping the biological tissue during the removal step of a volume of material from the block of containment material is reduced.

A further object of the invention is to provide a device of the type indicated at the beginning of this description, which ensures reproducibility and operational continuity over time.

A further object of the invention is to provide a device of the type indicated at the beginning of this description, which is of simple and cheap manufacture.

### Summary of the invention

In order to achieve one or more of the aforesaid objects, the invention relates to a device for processing a biological sample hosted on a support, wherein the biological sample comprises at least one biological tissue included in a block of containment material, the device comprising:
- an image acquisition system comprising an optical detector for acquiring at least one image of the biological sample,
- an automated transport line comprising an automatic conveyor defining a transport surface on which the support of the biological sample is transported, in order to advance the support hosting the biological sample towards the image acquisition system,
- an electronic processing unit associated with the image acquisition system and programmed to receive and process a first signal emitted by the optical detector and indicative of the acquired biological sample image, and
- an electronic controller configured to receive a second signal emitted by said electronic processing unit.

The device is characterized in that:
- the device further comprises an operator apparatus placed downstream of the image acquisition system, towards which said support hosting the biological sample is advanced by means of said transport line, said operator apparatus comprising at least one operating head which can be moved in a controlled way both along a plane xy parallel to the transport surface of the automatic conveyor, and along a z axis perpendicular to the transport surface of the automatic conveyor,
- the electronic processing unit associated with the image acquisition system is programmed in such a way that the second signal is indicative of the position into space of at least a portion of the block of containment material where there is no biological tissue, and
- said electronic controller is configured and programmed to control the operator apparatus on the basis of the second signal coming from the electronic processing unit to position the operating head in correspondence with the portion of the block of containment material where there is no biological tissue and subsequently to make the operating head perform the following operations in that order:
   (a) removal of a predefined volume of the block of containment material in correspondence with the aforesaid portion, and
   (b) insertion of at least one reference material in replacement of the volume of the block of containment material which has been removed.

In the aforesaid embodiment, the identification of a portion of the block of containment material where there is no biological tissue is automated, so the risk of making errors is limited. Furthermore, also the removal of a predefined volume of the block of containment material and the insertion of a reference material in the block to replace such removed volume is completely automated. This minimizes the possibility of making errors and damaging the biological tissue included within the block of containment material, thus obtaining a more secure and fast processing procedure of the biological sample.

Preferably, the device object of the present invention further comprises a microtome placed downstream of the operator apparatus and able to section the biological sample in which the at least one reference material has been inserted into at least two sections of biological sample.

In the preferred embodiment, the device object of the present invention further comprises:
- a second image acquisition system placed downstream of the microtome and able to acquire at least one image of at least one section of biological sample obtained by means of the microtome, wherein the section of biological sample is placed on a laboratory slide, said second image acquisition system comprising a second optical detector able to acquire both at least one image of the section of biological sample, including the biological tissue, the reference material and the containment material, and at least one image of the same section of only biological tissue, after a removal of the containment material and eventually also of the reference material,
- a second electronic processing unit, associated with the second image acquisition system and programmed to receive and process at least a third signal emitted by the second optical detector and indicative of the acquired image of the section of biological sample and at least a fourth signal indicative of the acquired image of the section of only biological tissue.

Preferably, the block of containment material is a paraffin block.

Preferably, the reference material is selected among composites based on microparticles/nanoparticles of barium titanate, zinc oxide, nanoclays, cellulose nanofibrils and other particles which guarantee a sufficient optical contrast between reference material and block of containment material, natural or synthetic polymers, such as agarose, chitosan, gellan gum, polyacrylamide, polyurethane, beeswax, candelilla wax and paraffin with added dye. More preferably, the reference material is selected among beeswax, candelilla wax and paraffin with added dye. In the preferred embodiment, the reference material is beeswax.

Preferably, the image acquisition system further comprises an illuminator and at least one mirror oriented in such a way as to allow the acquisition by said image acquisition system of an identification code which is present on the support.

The invention also relates to a method for processing a biological sample hosted on a support, wherein the biological sample comprises at least one biological tissue included in a block of containment material, the process comprising the steps of:
- providing an automated transport line comprising an automatic conveyor defining a transport surface on which the support of the biological sample is transported, in order to advance said support hosting said biological sample towards an image acquisition system comprising an optical detector,
- acquiring at least one image of the biological sample by means of the optical detector,
- sending a first signal S1 emitted by the optical detector and indicative of the acquired biological sample image to an electronic processing unit associated with the image acquisition system and configured to emit a second signal S2 on the basis of the first signal S1, and
- sending the second signal S2 emitted by the electronic processing unit to an electronic controller.

The method is characterized in that:
- the method further comprises the step of providing an operator apparatus placed downstream of the image acquisition system, towards which said support hosting the biological sample is advanced by means of said transport line, said operator apparatus comprising at least one operating head which can be moved in a controlled way both along a plane xy parallel to the transport surface of the automatic conveyor, and along a z axis perpendicular to the transport surface of the automatic conveyor,
- the electronic processing unit associated with the image acquisition system is programmed in such a way that the second signal S2 is indicative of the position into space of at least a portion of the block of containment material where there is no biological tissue,
- the electronic controller controls the operator apparatus on the basis of the second signal S2 coming from the electronic processing unit to position the operating head in correspondence with the portion of the block of containment material where there is no biological tissue and subsequently to make the operating head perform the following operations in that order:
   (a) removal of a predefined volume of the block of containment material in correspondence with the aforesaid portion, and
   (b) insertion of at least one reference material in replacement of the volume of the block of containment material which has been removed.

Preferably, the method object of the present invention further comprises the steps of:
- sectioning the biological sample in which the reference material has been inserted into at least two sections of biological sample by means of a microtome placed downstream of the operator apparatus, and
- placing at least one section of biological sample obtained by means of the microtome on a laboratory slide.

In the preferred embodiment, the method object of the present invention further comprises the steps of:
- positioning the laboratory slide on which the section of biological sample is placed, in correspondence with a second image acquisition system placed downstream of the microtome and comprising a second optical detector,
- acquiring at least one image of said the section of biological sample by means of the second optical detector,
- sending a third signal S3 emitted by the optical detector and indicative of the image of the section of biological sample acquired to a second electronic processing unit associated with the second image acquisition system,
- removing the block of containment material and eventually also the reference material from the section of biological sample placed on the laboratory slide during the processing necessary to perform a staining of the biological tissue, so as to leave the section of only biological tissue positioned on the laboratory slide,
- repositioning the laboratory slide on which the section of only biological tissue is placed in correspondence with the second image acquisition system placed downstream of the microtome,
- acquiring at least one image of the section of only biological tissue by means of the second optical detector,
- sending a fourth signal S4 emitted by the optical detector and indicative of the image of the section of only biological tissue acquired to the second electronic processing unit associated with the second image acquisition system,
- processing and integrating the acquired signals S3 and S4 in order to identify the virtual position of the reference material on the image of the section of only biological tissue, overlapping the image of the section of biological sample with the image of the section of only biological tissue.

In the above described embodiment, it is evident how the method object of the present invention allows, thanks to the integration of the signals S3 and S4, to be sure of the position of the section of biological tissue which is being analyzed, compared to the whole biological tissue initially included in the paraffin block, even when the reference material is removed during the sample processing steps. This allows to perform all the necessary treatments on the biologic tissue section without having to worry if such treatments could be harmful to the reference material.

Preferably, the block of containment material is a paraffin block.

In the preferred embodiment, the reference material is selected among composites based on microparticles/nanoparticles of barium titanate, zinc oxide, nanoclays, cellulose nanofibrils and other particles that guarantee a sufficient optical contrast between reference material and block of containment material, natural or synthetic polymers, such as agarose, chitosan, gellan gum, polyacrylamide, polyurethane, beeswax, candelilla wax and paraffin with added dye.

### Detailed description of the invention

Further features and advantages of the invention will become apparent from the following description with reference to the attached drawings, given purely by way of non-limiting example, in which:
- figure 1 is a lateral view of a device object of the present invention,
- figure 2a is a perspective view of a biological sample processed by means of the device illustrated in figure 1,

- figure 2b is a perspective view of the biological sample illustrated in figure 2a from which a predefined volume of material has been removed from the block of containment material,
- figure 2c is a perspective view of the biological sample illustrated in figure 2b in which a reference material has been inserted,
- figure 3 is a perspective view of a laboratory slide on which a section of the biological sample processed by the device object of the present invention rests,
- figure 4a is a reproduction of an image of a section of the biological sample obtained by means of the device object of the present invention, before the step of removing the block of containment material and the reference material, and
- figure 4b is a reproduction of an image of a section of the biological tissue obtained by means of the device object of the present invention, in which the position of the reference material has been virtually reconstructed.

The term "biological tissue" as used in the present description refers to a group of structurally similar cells, associated by function. In one embodiment, the biological tissue is a tissue from a mammal, preferably a human.

The term "containment material" as used in the present description refers to a material suitable for including one or more biological tissues in such a way as to facilitate their following processing. In the preferred embodiment, the containment material in which the biological tissue is included is paraffin.

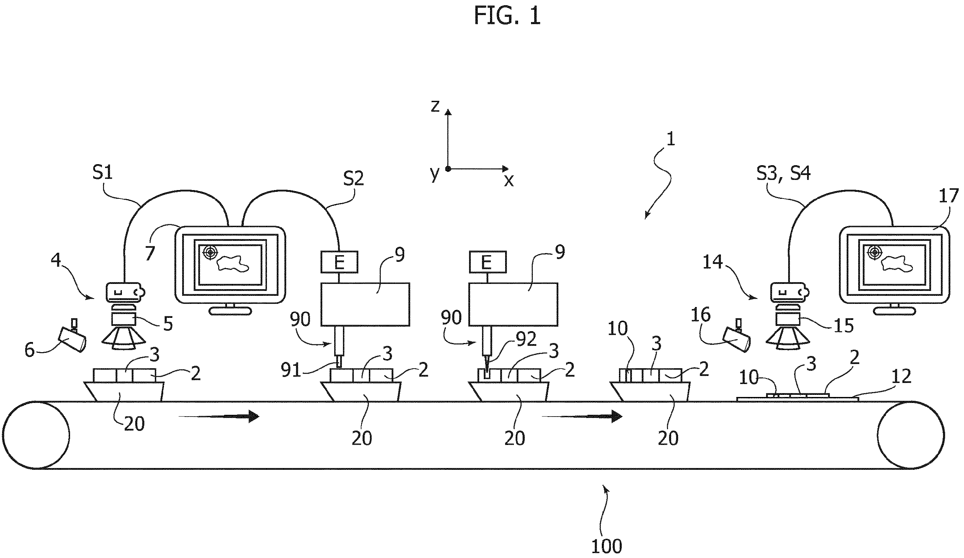

In figure 1, the number 1 indicates as a whole a device for processing a biological sample, object of the present invention.

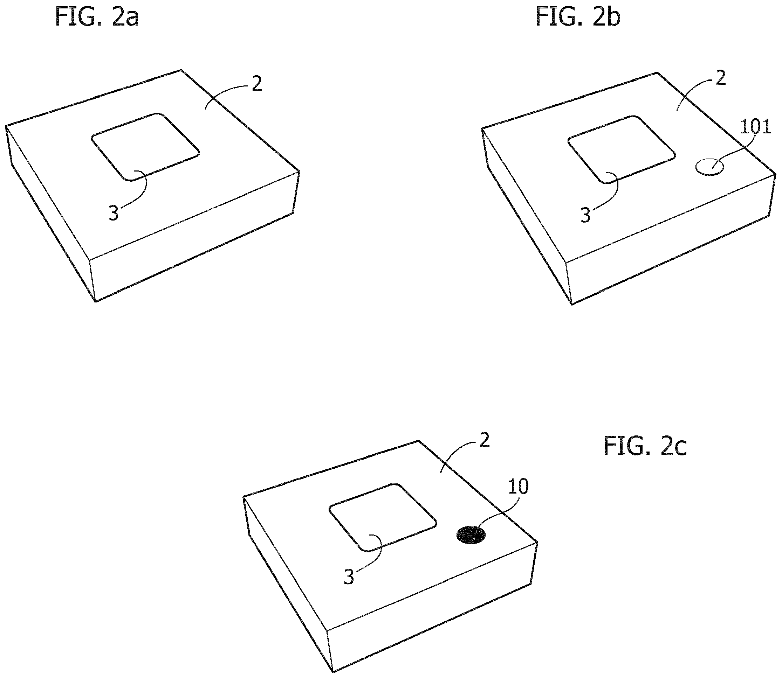

As visible in particular in figure 2a, the biological sample processed by the device 1 comprises a biological tissue 3 included in a block of containment material 2.

It is to be intended that the biological sample can also include more than one biological tissue 3 included in the block of containment material 2. Furthermore, in the embodiment shown in figures 2a, 2b and 2c the biological tissue 3 and the block of containment material 2 have a square shape, but it is evident that both the containment block 2 and the biological tissue 3 included in it can have shapes and sizes other than those represented, for example triangular, rectangular, parallelepiped, irregular.

Furthermore, in the embodiment shown the block of containment material 2 is a paraffin block, but it is to be understood that it can be of any other type of known material which is suitable for use in order to include a biological tissue 3 for the following processing thereof, for instance the block of containment material 2 can comprise polymers such as glycol methacrylate, methyl methacrylate, agarose, chitosan and polyacrylamide or beeswax and candelilla wax. The embedding of the biological tissue 3 within the block of containment material 2 is performed according to any one of the techniques already known in the prior art for this purpose. As visible in figure 1, the biological sample is hosted on a support 20, which can be any type of support known in the art and suitable for the purpose, i.e. a histology cassette, a container or a carrier.

As can be seen in figure 1, the device 1 comprises an automated transport line 100 comprising an automatic conveyor defining a transport surface on which the support 20 of the biological sample is transported. The automated conveyor line 100 advances the support 20 towards an image acquisition system 4, comprising an optical detector 5, arranged to acquire at least one image of the biological sample comprising the biological tissue 3 included in the block of containment material 2. It is it to be understood that the optical detector 5 can be of any known type, for example a camera or a video camera, and that more than one image of the biological sample can also be acquired at the image acquisition system 4. Preferably, the image acquisition system 4 further comprises an illuminator 6, arranged to irradiate the biological sample with a light radiation so as to allow the acquisition of a high quality image of the biological sample, and one or more mirrors (not illustrated) oriented in such a way as to allow the acquisition, by the image acquisition system, of an identification code (e.g. a QR code) which is present on the support 20 and necessary to ensure the traceability of the block of containment material 2 being processed.

In the illustrated example, an electronic processing unit 7, programmed to receive and process a first signal S1 that is emitted by the optical detector 5, is associated to the image acquisition system 4. It is to be understood that it is possible that more than one signal S1 is emitted by the optical detector 5. In particular, the signal S1 is indicative of the image acquired by the optical detector 5. In the preferred embodiment, the electronic processing unit 7 comprises an "automatic detection strategy" algorithm, capable of distinguish, on the basis of the signal S1, the positions in the space of the image acquired by the optical detector 5 which are occupied by the biological tissue 3 from the positions in the space of the image where the biological tissue 3 is not present.

As can be seen in figure 1, downstream of the image acquisition system 4 an operator apparatus 9 is arranged, which comprises an operating head 90 which can be moved in a controlled manner both along a plane xy parallel to the transport surface of the automatic conveyor, and along a z axis perpendicular to the transport surface of the automatic conveyor. It is to be understood that the operator apparatus 9 can also include more than one operating head 90, unlike the embodiment shown in figure 1.

In the present description and in the appended drawings the construction details of the operator apparatus 9 and of the operating head 90 are not illustrated, since these details can be made in any known way and do not fall, taken alone, within the scope of present invention. The elimination of these details from the drawings also makes the latter simpler and easier to understand. For example, the operator apparatus could be in the form of a Cartesian robot or a multi-axis manipulator robot, and the operating head 90 could be equipped with both a punching tool 91 and an insertion device 92 (as described below) and could be positioned from time to time to activate the punching tool or the insertion device.

The operator apparatus 9 is associated with an electronic controller E, which is configured to receive a second signal S2 emitted by the electronic processing unit 7 on the basis of the signal S1 coming from the optical detector 5. In particular, the second signal S2 is indicative of the position in the space of a portion of the block of containment material 2 where there is no biological tissue 3. The electronic controller E is configured and programmed to control the operator apparatus 9 on the basis of the second signal S2 to position the operating head 90 in correspondence with the portion of the block of containment material 2 where there is no biological tissue 3 and subsequently to make the operating head 90 perform the following operations in order:
(a) removal of a predefined volume of the block of containment material 2 in correspondence with the aforesaid detected portion, and
(b) insertion of a reference material 10 in replacement of the volume of the block of containment material 2 which has been removed.

In the preferred embodiment, the operator apparatus 9 positions the operating head 90 in correspondence with the aforementioned portion of the block of containment material 2 where there is no biological tissue 3, moving it both along the aforementioned xy plane and along the z axis. However, in a different embodiment, the operating head 90 is already correctly positioned along the xy plane, so that it is positioned only by moving it along the z axis.

In the embodiment shown, the removal of the predefined volume of the block of containment material 2 is carried out by means of a punching tool 91 while the insertion of the reference material 10 is carried out by means of any known insertion device associated with the operating head 90, for example a syringe 92 with a hollow needle pushed by a piston.

As can be seen in particular in figure 2c, in the illustrated embodiment a single reference material 10 is inserted in the block of containment material 2. However, it is to be understood that it is also possible that more than one reference material 10 is inserted within the block of the containment material 2, and in this case it is possible that more than a second signal S2 is emitted by the electronic processing unit 7 and sent to the electronic controller E, so that each signal is indicative of a respective position in the space of a portion of the block of containment material 2 where there is no biological tissue 3. If more reference materials 10 are inserted, they can be identical in composition, shape, volume, or different for one or more of such parameters. Furthermore, they can be positioned symmetrically to each other, or at different angles.

In the preferred embodiment, the reference material 10 comprises wax in its various forms, i.e. beeswax, candelilla wax or paraffin with an added dye. However, the reference material 10 can also be of a different type, for example it can comprise a polymer such as barium titanate microparticle/nanoparticle composites, zinc oxide, nanoclays, cellulose nanofibrils and other particles that ensure enough optical contrast between reference material 10 and block of containment material 2, natural or synthetic polymers, such as for example agarose, chitosan, gellan gum, polyacrylamide, polyurethane.

In the preferred embodiment, the removed volume of the block of containment material 2 is cylindrical in shape, so that before the insertion of the volume of reference material 10, a cylindrical groove 101 is present in the block of containment material 2, as visible in figure 2b. However, also embodiments in which the removed volume of containment material 2 is of a different shape fall under the scope of the present invention, for example square, rectangular, pyramidal, conical, parallelepiped, star, L-shaped or irregular.

In the preferred embodiment, the device 1 further comprises a microtome (not shown) located downstream of the operator apparatus 9. The microtome is arranged to section the biological sample wherein the reference material 10 has been inserted into a plurality of sections of biological sample. It is to be understood that the microtome can be of any type known in the prior art and suitable for the purpose and that the number, thickness and dimensions of the obtained biological sample sections can be variable. Furthermore, the shape of the biological sample sections can also be of different types, i.e. square, rectangular, triangular, irregular. In one embodiment, the obtained biological sample sections are all equal to each other. In a different embodiment, the obtained biological sample sections are different from each other for one or more of the above-mentioned parameters.

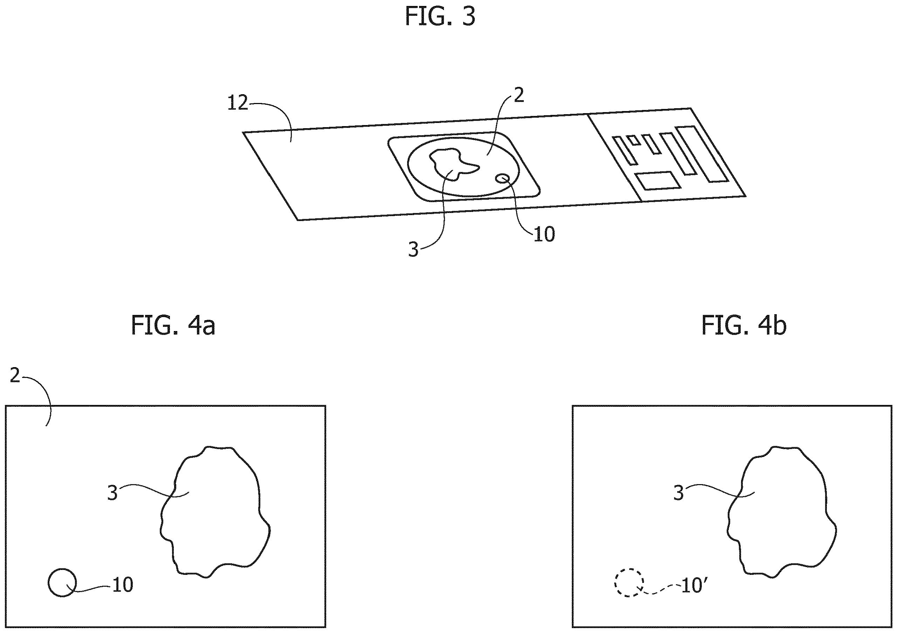

In the preferred embodiment, downstream of the microtome there is a second image acquisition system 14 comprising a second optical detector 15 in which, after having positioned on a laboratory slide 12 a section of biological sample obtained by means of the microtome, an image of said section of biological sample is acquired, thus obtaining an image shown in figure 4a. Furthermore, again in correspondence with the second image acquisition system 14, a further image is later acquired, shown in figure 4b, of the same section of biological sample mentioned above, from which the section of the block of containment material 2 and eventually also the section of reference material 10 have been removed and comprising, therefore, the section of only biological tissue 3. The removal of the section of reference material 10 and of the section of the block of containing material 2 takes place due to processing that are carried out to prepare the biological tissue for the subsequent microscopic analysis, such as staining, used to better visualize the biological structures of interest.

It is to be understood that the second optical detector 15 can be of any known type, for instance a camera or a video camera. Furthermore, in the embodiment illustrated in figure 3, a single section of biological sample and a single section of only biological tissue 3 obtained by means of the microtome are positioned on the laboratory slide 12, but it is to be understood that two or more sections of biological sample and two or more sections of only biological tissue 3 can also be positioned on the same laboratory slide 12. Furthermore, it is to be understood that at the second image acquisition system 14, even more than one image of the section of biological sample and of the corresponding section of only biological tissue 3 can be acquired.

In the embodiment shown in figure 1, the second image acquisition system 14 further comprises a second illuminator 16 arranged to irradiate with a light radiation the section of biological sample or the section of only biological tissue 3 positioned on the laboratory slide 12, so as to improve the quality of the image acquired by means of the optical detector 15.

A second electronic processing unit 17, programmed to receive and process a third signal S3 and a fourth signal S4 which are emitted by the second optical detector 15, is associated with the second image acquisition system 14. In particular, the signal S3 is indicative of the image of the section of biological sample, while the signal S4 is indicative of the image of the corresponding section of only biological tissue 3. It is to be understood that even more than a third signal S3 and a fourth signal S4 can be emitted by the second optical detector 15, for instance in the case in which more than one image of the section of biological sample and more than one image of the corresponding section of only biological tissue 3 are acquired at the second image system 14.

The invention also relates to a method for processing a biological sample hosted on a support 20, wherein the biological sample comprises a biological tissue 3 included in a block of containment material 2, comprising the steps of:
- providing an automated transport line 100 comprising an automatic conveyor defining a transport surface on which the support 20 of the biological sample is transported, in order to advance the support 20 hosting the biological sample towards an image acquisition system 4 comprising an optical detector 5,
- acquiring at least one image of the biological sample by means of the optical detector 5,
- sending a first signal S1 emitted by the optical detector 5 and indicative of the acquired image to an electronic processing unit 7 associated with the image acquisition system 4 and configured to emit a second signal S2 on the basis of the first signal S1, wherein the second signal S2 is indicative of the position into space of at least a portion of the block of containment material 2 where there is no biological tissue 3,
- providing an operator apparatus 9, placed downstream of the image acquisition system 4, towards which said support 20 hosting the biological sample is advanced by means of said transport line 100, said operator apparatus comprising at least one operating head 90 which can be moved in a controlled way both along a plane xy parallel to the transport surface of the automatic conveyor, and along a z axis perpendicular to the transport surface of the automatic conveyor,
- sending the second signal S2 emitted by the electronic processing unit 7 to an electronic controller E so that the electronic controller E controls the operator apparatus 9, on the basis of the second signal S2, to position the operating head 90 in correspondence with the portion of the block of containment material 2 where there is no biological tissue 3 and subsequently to make the operating head 90 perform the following operations in that order:
   (a) removal of a predefined volume of the block of containment material 2 in correspondence with the aforesaid detected portion, and
   (b) insertion of a reference material 10 in replacement of the volume of the block of containment material 2 which has been removed.

Preferably, the method further comprises the steps of:
- sectioning the biological sample in which the reference material 10 has been inserted into a plurality of sections of biological sample by means of a microtome (not illustrated) placed downstream of the mechanical actuator 9, and
- placing at least one section of biological sample obtained by means of the microtome on a laboratory slide 12.

In the preferred embodiment, the method further comprises the steps of:
- positioning the laboratory slide 12, on which the section of biological sample obtained by means of the microtome is placed, in correspondence with a second image acquisition system 14 placed downstream of the microtome and comprising a second optical detector 15 and, preferably, a second illuminator 16,
- acquiring at least one image of the section of biological sample by means of the second optical detector 15,
- sending a third signal S3 emitted by the second optical detector 15 and indicative of the acquired image to a second electronic processing unit 17 associated with the second image acquisition system 14,
- removing the block of containment material 2 and eventually also the reference material 10 from the section of biological sample placed on the laboratory slide 12 during the processing necessary to perform a staining of the biological tissue 3, so as to leave the section of only biological tissue 3 positioned on the laboratory slide 12,
- repositioning the laboratory slide 12 on which the section of only biological tissue 3 is placed in correspondence with the second image acquisition system 14 placed downstream of the microtome,
- acquiring at least one image of the section of only biological tissue 3 by means of the second optical detector 15,
- sending a fourth signal S4 emitted by the second optical detector 15 and indicative of the acquired image to the second electronic processing unit associated with the second image acquisition system 14,
- processing and integrating the signals S3 and S4 in order to identify the virtual position 10' of the reference material 10 on the image of the section of only biological tissue 3, overlapping the image of the section of biological sample with the image of the section of only biological tissue 3.

It is to be understood that the processing necessary to perform a staining of the biological tissue 3 can be carried out using any method known for the purpose, using any type of known coloring material and coloring apparatus.

It is to be understood that the above method, in each of the described embodiments, can be carried out using any of the embodiments of the device 1 and of the biological sample described above.

In the preferred embodiment in which a cylindrical volume of containment material 2 is removed (and replaced by the reference material 10), once the following sectioning has been carried out by means of the microtome, the position of the reference material 10 in the xy plane of the section of biological sample obtained has a fixed distance from the sectioned biological tissue 3. In this case, the height on the z axis (to identify, for each different section of biological sample, which is the corresponding point of the biological tissue 3 in height) can be obtained indirectly, knowing the thickness of each cut and the number of cuts performed by the microtome. Both of this information is known, adjustable by the operator and can be reported on a bar code accompanying the support 20 which initially contains the block of containment material 2.

In an alternative embodiment, wherein the shape of the volume of removed containment material 2 and therefore of the inserted reference material 10 is variable in height or asymmetrical (for example a pyramid with a triangular base or a cone), the height along the z axis to which a specific section of biological sample can be traced back is obtained directly, by observing the difference between the various sections of the reference material 10 and knowing the thickness of the sections obtained by means of the microtome.

In the following, a description will be provided concerning the use of the preferred embodiment, shown in figures 1 to 4, of the device 1 for processing a biological sample described above, wherein the block of containment material 2 is a block of paraffin, the reference material 10 comprises beeswax and the optical detectors 5 and 15 are cameras.

As can be seen in figure 1, the biological sample to be processed using the device 1 object of the present invention comprises a biological tissue 3 included in a paraffin block 2. The biological sample is hosted on a support 20, which is transported by an automated transport line 100, defining a transport surface, towards an image acquisition system 4, at which an illuminator 6 irradiates the biological sample with a light radiation and a camera 5 acquires an image of the biological sample. At the same time, the image acquisition system 4 can comprise one or more mirrors oriented in such a way as to allow the acquisition, by the image acquisition system 4, of an identification code (e.g. a QR code) which is present on the support 20, typically on an upwardly inclined end face of the support, even if this code is not visible by the image acquisition system 4 due to the positioning of the support 20 during transport. In this way the traceability of the paraffin block 2 is in any case ensured.

The camera 5, on the basis of the acquired image, generates and sends a first signal S1 to an electronic processing unit 7 associated with the image acquisition system 4. The electronic processing unit 7 comprises an "automatic detection strategy" algorithm able to discern, on the basis of the signal S1, the positions in the space of portions of the paraffin block 2 where there is biological tissue 3 from the positions in the space of portions of the paraffin block 2 where the biological tissue 3 is not present. On the basis of the first signal S1, the electronic processing unit 7 generates a second signal S2, indicative of the position into space of a portion of the paraffin block 2 where there is no biological tissue 3.

The signal S2 is then sent to an electronic controller E which, in turn, controls an operator apparatus 9, located downstream of the image acquisition system 4, which comprises an operating head 90. More specifically, the electronic controller E controls the operator apparatus 9 to move the operating head 90 first along an xy plane, parallel to the transport surface defined by the automatic conveyor, and then along a z axis perpendicular to the transport surface defined by the automatic conveyor, in order to position the operating head 90 in correspondence with the portion of the paraffin block 2 where there is no biological tissue 3 identified thanks to the "automatic detection strategy" algorithm. Once positioned, the operating head 90 removes a predefined paraffin volume from the paraffin block 2 by means of the punching tool 91, associated with the operating head 90, thus leaving an empty volume 101 in correspondence with the paraffin block 2. Later, the operating head 90 inserts a reference material 10 comprising beeswax into the paraffin block 2, replacing the predefined volume of paraffin which has been removed. The insertion of beeswax 10 takes place thanks to the syringe 92, having a hollow needle and a piston to push the reference material 10 to be inserted through the hollow needle.

After the insertion of the reference material 10, the biological sample is sectioned by means of a microtome (not shown) placed downstream of the image acquisition system 4, thus obtaining a plurality of sections of biological sample. Each of the obtained biological sample sections comprises the reference material 10, which allows to orient the different sections of biological sample between them, allowing the overall reciprocal orientation to be reconstructed. Each of the obtained biological sample sections further comprises the section of the paraffin block 2 and the section of the biological tissue 3.

Each of the biological sample sections thus obtained is subsequently positioned on a respective laboratory slide 12, which is then brought to a second image acquisition system 14, located downstream of the microtome. In this location, a second illuminator 16 irradiates the biological sample section positioned on the laboratory slide 12 with a light radiation and a second camera 15 acquires an image of the biological sample section. The camera 15, on the basis of the acquired image, generates and sends a third signal S3 to a second electronic processing unit 17 associated with the second image acquisition system 14. The signal S3 is indicative of the image of the acquired biological sample section.

Later, it is performed the necessary processing for a staining of the biological tissue 3, which is useful for better visualizing the biological structures of interest during the subsequent microscopic analyses. This step involves the removal of the paraffin block 2 ("de-paraffinization") from the laboratory slide 12. Furthermore, the reference material 10 is also at risk of being removed from the laboratory slide 12 during processing.

In the event that the reference material 10 has been removed, the laboratory slide 12 - on which the section of only biological tissue 3 is now positioned - is again transported in correspondence with the second image acquisition system 14, in which it is acquired an image of the section of only biological tissue 3 repeating the above mentioned operations. The camera 15, on the basis of the image of the section of only biological tissue 3 acquired, generates and sends a fourth signal S4 to the second electronic processing unit 17 associated with the second image acquisition system 14. The signal S4 is indicative of the image of the section of only biological tissue 3 acquired. The second electronic processing unit 17 processes and integrates the signals S3 and S4 to identify the virtual position 10' of the reference material 10 on the image of the section of only biological tissue 3. This operation is carried out by superimposing the image of the section of biological sample, comprising both the biological tissue 3 and the reference material 10, with the image comprising the section of only biological tissue 3.

As it is evident from the above description, the device for processing a biological sample object of the present invention allows not only to automatically detect the exact position of the block of containment material where there is no biological tissue, in which to insert the reference material, regardless of the different shapes, sizes and orientations of the biological tissue included within the block of containment material, but also to carry out the insertion of the reference material within the biological sample in a completely automatic way. The automation of such insertion allows to minimize the risk of human errors and maximizes the reproducibility of the operations, as well as speeding up the entire biological sample processing procedure.

Furthermore, studies and experiences conducted by the Applicant have shown that, thanks to the presence of the second image acquisition system, the device object of the present invention also allows to precisely identify the virtual position of the reference material, in the event that it is removed during the processing steps of the biological sample which are necessary to prepare it for microscopic analyses. This allows to be always sure of the precise position of the analyzed biological tissue section with respect to the other biological sample sections obtained by means of the microtome.

Of course, without prejudice to the principle of the invention, the construction details and the embodiments may vary widely with respect to what is described and illustrated purely by way of example, without thereby departing from the scope of protection of the present invention, as defined in the annexed claims.

## Claims

1. Device (1) for processing a biological sample hosted on a support (20), wherein said biological sample comprises at least one biological tissue (3) included in a block of containment material (2), said device (1) comprising:
- an image acquisition system (4) comprising an optical detector (5) for acquiring at least one image of said biological sample,
- an automated transport line (100) comprising an automatic conveyor defining a transport surface on which the support (20) of the biological sample is transported, in order to advance said support (20) hosting the biological sample towards said image acquisition system (4),
- an electronic processing unit (7) associated with said image acquisition system (4) and programmed to receive and process a first signal (S1) emitted by said optical detector (5) and indicative of the acquired biological sample image, and
- an electronic controller (E) configured to receive a second signal (S2) emitted by said electronic processing unit (7),
wherein:
- the device (1) further comprises an operator apparatus (9) placed downstream of said image acquisition system (4), towards which said support (20) hosting the biological sample is advanced by means of said transport line, said operator apparatus (9) comprising at least one operating head (90) which can be moved in a controlled way both along a plane xy parallel to said transport surface of the automatic conveyor, and along a z axis perpendicular to said transport surface of the automatic conveyor,
- the electronic processing unit (7) associated with said image acquisition system (4) is programmed in such a way that said second signal (S2) is indicative of the position into space of at least a portion of said block of containment material (2) where there is no biological tissue (3), and
- said electronic controller (E) is configured and programmed to control said operator apparatus (9) on the basis of said second signal (S2) coming from said electronic processing unit (7) to position the at least one operating head (90) in correspondence with said portion of the block of containment material (2) where there is no biological tissue (3) and subsequently to make said operating head (90) perform the following operations in that order:
(a) removal of a predefined volume of the block of containment material (2) in correspondence with said portion, and
(b) insertion of at least one reference material (10) in replacement of said volume of the block of containment material (2) which has been removed.

2. Device (1) according to claim 1, **characterized in that** the device (1) further comprises a microtome placed downstream of said operator apparatus (9) and able to section the biological sample in which the at least one reference material (10) has been inserted into at least two sections of biological sample.

3. Device (1) according to claim 2, **characterized in that** it further comprises:
- a second image acquisition system (14) placed downstream of said microtome and able to acquire at least one image of at least one section of biological sample obtained by means of said microtome, wherein the section of biological sample is placed on a laboratory slide (12), said second image acquisition system (14) comprising a second optical detector (15) able to acquire both at least one image of said at least one section of biological sample, including the biological tissue (3), the reference material (10) and the containment material (2), and at least one image of the same section of only biological tissue (3), after a removal of the containment material (2) and eventually also of the reference material (10),
- a second electronic processing unit (17), associated with said second image acquisition system (14) and programmed to receive and process at least a third signal (S3) emitted by said second optical detector (15) and indicative of the acquired image of the section of biological sample and at least a fourth signal (S4) indicative of the acquired image of the section of only biological tissue (3).

4. Device (1) according to claim 1, **characterized in that** the block of containment material (2) is a paraffin block.

5. Device (1) according to claim 1, **characterized in that** the at least one reference material (10) is selected among composites based on microparticles/nanoparticles of barium titanate, zinc oxide, nanoclays, cellulose nanofibrils and other particles which guarantee a sufficient optical contrast between reference material (10) and block of containment material (2), natural or synthetic polymers, such as agarose, chitosan, gellan gum, polyacrylamide, polyurethane, beeswax, candelilla wax and paraffin with added dye.

6. Device (1) according to claim 1, **characterized in that** said image acquisition system (4) further comprises an illuminator (6) and at least one mirror oriented in such a way as to allow the acquisition by said image acquisition system (4) of an identification code which is present on said support (20).

7. Method for processing a biological sample hosted on a support (20), wherein said biological sample comprises at least one biological tissue (3) included in a block of containment material (2), said method comprising the steps of:
- providing an automated transport line (100) comprising an automatic conveyor defining a transport surface on which the support (20) of the biological sample is transported, in order to advance said support (20) hosting said biological sample towards an image acquisition system (4) comprising an optical detector (5),
- acquiring at least one image of said biological sample by means of said optical detector (5),
- sending a first signal (S1) emitted by said optical detector (5) and indicative of the acquired biological sample image to an electronic processing unit (7) associated with said image acquisition system (4) and configured to emit a second signal (S2) on the basis of said first signal (S1), and
- sending the second signal (S2) emitted by said electronic processing unit (7) to an electronic controller (E),
wherein:
- the method further comprises the step of providing an operator apparatus (9) placed downstream of said image acquisition system (4), towards which said support (20) hosting the biological sample is advanced by means of said transport line (100), said operator apparatus (9) comprising at least one operating head (90) which can be moved in a controlled way both along a plane xy parallel to said transport surface of the automatic conveyor, and along a z axis perpendicular to said transport surface of the automatic conveyor,
- the electronic processing unit (7) associated with said image acquisition system (4) is programmed in such a way that said second signal (S2) is indicative of the position into space of at least a portion of said block of containment material (2) where there is no biological tissue (3),
- said electronic controller (E) controls said operator apparatus (9) on the basis of said second signal (S2) coming from said electronic processing unit (7) to position the at least one operating head (90) in correspondence with said portion of the block of containment material (2) where there is no biological tissue (3) and subsequently to make said operating head (90) perform the following operations in that order:
(a) removal of a predefined volume of the block of containment material (2) in correspondence with said portion, and
(b) insertion of at least one reference material (10) in replacement of said volume of the block of containment material (2) which has been removed.

8. Method according to claim 7, **characterized in that** it further comprises the steps of:
- sectioning the biological sample in which the at least one reference material (10) has been inserted into at least two sections of biological sample by means of a microtome placed downstream of said operator apparatus (9), and
- placing at least one section of biological sample obtained by means of said microtome on a laboratory slide (12).

9. Method according to claim 8, **characterized in that** it further comprises the steps of:
- positioning said laboratory slide (12) on which the at least one section of biological sample is placed, in correspondence with a second image acquisition system (14) placed downstream of said microtome and comprising a second optical detector (15) ,
- acquiring at least one image of said at least one section of biological sample by means of said second optical detector (15),
- sending a third signal (S3) emitted by said second optical detector (15) and indicative of the image of said at least one section of biological sample acquired to a second electronic processing unit (17) associated with said second image acquisition system (14),
- removing the block of containment material (2) and eventually also the at least one reference material (10) from the at least one section of biological sample placed on said laboratory slide (12) during the processing necessary to perform a staining of the biological tissue (3), so as to leave the section of only biological tissue (3) positioned on said laboratory slide (12),
- repositioning said laboratory slide (12) on which said section of only biological tissue (3) is placed in correspondence with said second image acquisition system (14) placed downstream of said microtome,
- acquiring at least one image of said section of only biological tissue (3) by means of said second optical detector (15),
- sending a fourth signal (S4) emitted by said second optical detector (15) and indicative of the image of said section of only biological tissue (3) acquired to said second electronic processing unit (17) associated with the second image acquisition system (14),
- processing and integrating the acquired signals (S3, S4) in order to identify the virtual position (10') of the reference material (10) on the image of said section of only biological tissue (3), overlapping the image of the section of biological sample with the image of the section of only biological tissue (3).

10. Method according to claim 7, **characterized in that** the block of containment material (2) is a paraffin block.

11. Method according to claim 7, **characterized in that** said at least one reference material (10) is selected among composites based on microparticles/nanoparticles of barium titanate, zinc oxide, nanoclays, cellulose nanofibrils and other particles that guarantee a sufficient optical contrast between reference material (10) and block of containment material (2), natural or synthetic polymers, such as agarose, chitosan, gellan gum, polyacrylamide, polyurethane, beeswax, candelilla wax and paraffin with added dye.

## Patentansprüche

1. Vorrichtung (1) zum Verarbeiten einer biologischen Probe, die auf einem Träger (20) aufgenommen ist, wobei die biologische Probe mindestens ein biologisches Gewebe (3) umfasst, das in einem Block aus Einschlussmaterial (2) enthalten ist, wobei die Vorrichtung (1) umfasst:
- ein Bilderfassungssystem (4), umfassend einen optischen Detektor (5) zum Erfassen mindestens eines Bildes der biologischen Probe,
- eine automatisierte Transportlinie (100), umfassend einen automatischen Förderer, der eine Transportfläche definiert, auf welcher der Träger (20) der biologischen Probe transportiert wird, um den die biologische Probe aufnehmenden Träger (20) in Richtung des Bilderfassungssystems (4) zu fördern,
- eine elektronische Verarbeitungseinheit (7), die dem Bilderfassungssystem (4) zugeordnet und zum Empfangen und Verarbeiten eines ersten Signals (S1) programmiert ist, das von dem optischen Detektor (5) emittiert ist und das erfasste Bild der biologischen Probe anzeigt, und
- eine elektronische Steuerung (E), die ausgebildet ist, ein zweites Signal (S2) zu empfangen, das von der elektronischen Verarbeitungseinheit (7) emittiert wird,
wobei:
- die Vorrichtung (1) ferner eine dem Bilderfassungssystem (4) nachgeordnet angeordnete Bedienvorrichtung (9) umfasst, zu welcher der die biologische Probe aufnehmende Träger (20) mittels der Transportlinie befördert wird, wobei die Bedienvorrichtung (9) mindestens einen Bedienkopf (90) umfasst, der sowohl entlang einer xy-Ebene parallel zu der Transportfläche des automatischen Förderers als auch entlang einer zu der Transportfläche des automatischen Förderers senkrechen z-Achse in einer kontrollierten Weise bewegbar ist,
- wobei die dem Bilderfassungssystem (4) zugeordnete elektronische Verarbeitungseinheit (7) so programmiert ist, dass das zweite Signal (S2) die räumliche Position mindestens eines Teils des Blocks aus Einschlussmaterial (2) anzeigt, wo kein biologisches Gewebe (3) vorhanden ist, und
- wobei die elektronische Steuerung (E) ausgebildet und programmiert ist, die Bedienvorrichtung (9) auf der Grundlage des zweiten Signals (S2) zu steuern, das von der elektronischen Verarbeitungseinheit (7) stammt, um den zumindest einen Bedienkopf (90) in Übereinstimmung mit dem Teil des Blocks aus Einschlussmaterial (2) zu positionieren, wo kein biologisches Gewebe (3) vorhanden ist, und um anschließend den Bedienkopf (90) zu veranlassen, die folgenden Operationen in dieser Reihenfolge durchzuführen:
(a) Entfernen eines vordefinierten Volumens des Blocks aus Einschlussmaterial (2) in Übereinstimmung mit dem Teil, und
(b) Einfügen mindestens eines Referenzmaterials (10) anstelle des Volumens des Blocks aus Einschlussmaterial (2), welches entfernt wurde.

2. Vorrichtung (1) nach Anspruch 1, **dadurch gekennzeichnet, dass** die Vorrichtung (1) ferner ein Mikrotom umfasst, das der Bedienvorrichtung (9) nachgeordnet angeordnet ist und in der Lage ist, die biologische Probe, in der das mindestens eine Referenzmaterial (10) eingebracht ist, in mindestens zwei Teile der biologischen Probe zu teilen.

3. Vorrichtung (1) nach Anspruch 2, **dadurch gekennzeichnet, dass** sie ferner umfasst:
- ein zweites Bilderfassungssystem (14), das dem Mikrotom nachgeordnet angeordnet ist und in der Lage ist, mindestens ein Bild von mindestens einem Teil der mittels des Mikrotoms erhaltenen biologischen Probe zu erfassen, wobei der Teil der biologischen Probe auf einem Laborobjektträger (12) angeordnet ist, wobei das zweite Bilderfassungssystem (14) einen zweiten optischen Detektor (15) umfasst, der in der Lage ist, sowohl mindestens ein Bild des mindestens einen Teils der biologischen Probe zu erfassen, einschließlich des biologischen Gewebes (3), des Referenzmaterials (10) und des Einschlussmaterials (2), und mindestens ein Bild desselben Teils aus nur biologischem Gewebe (3) nach einem Entfernen des Einschlussmaterial (2) und gegebenenfalls auch des Referenzmaterials (10),
- eine zweite elektronische Verarbeitungseinheit (17), die dem zweiten Bilderfassungssystem (14) zugeordnet ist und programmiert ist, mindestens ein drittes emittiertes Signal (S3), das durch den zweiten optischen Detektor (15) emittiert wird und das erfasste Bild des Teils der biologischen Probe anzeigt, und mindestens ein viertes Signal (S4), das das erfasste Bild des Teils aus nur biologischem Gewebe (3) anzeigt, zu empfangen und zu verarbeiten.

4. Vorrichtung (1) nach Anspruch 1, **dadurch gekennzeichnet, dass** der Block aus Einschlussmaterial (2) ein Paraffinblock ist.

5. Vorrichtung (1) nach Anspruch 1, **dadurch gekennzeichnet, dass** das mindestens eine Referenzmaterial (10) ausgewählt ist aus Kompositen auf Basis von Mikropartikeln/Nanopartikeln aus Bariumtitanat, Zinkoxid, Nanoclays, Zellulose-Nanofibrillen und anderen Partikeln, die für einen ausreichende optischer Kontrast zwischen dem Referenzmaterial (10) und dem Block aus Einschlussmaterial (2) sorgen, natürlichen oder synthetischen Polymeren wie Agarose, Chitosan, Gellangummi, Polyacrylamid, Polyurethan, Bienenwachs, Candelillawachs und Paraffin mit zugesetztem Farbstoff.

6. Vorrichtung (1) nach Anspruch 1, **dadurch gekennzeichnet, dass** das Bilderfassungssystem (4) ferner einen Illuminator (6) und mindestens einen Spiegel umfasst, der derart ausgerichtet ist, dass die Erfassung eines auf dem Träger (20) vorliegenden Identifikationscodes durch das Bilderfassungssystem (4) ermöglicht wird.

7. Verfahren zum Verarbeiten einer biologischen Probe, die auf einem Träger (20) aufgenommen ist, wobei die biologische Probe mindestens ein biologisches Gewebe (3) umfasst, das in einem Block aus Einschlussmaterial (2) enthalten ist, wobei das Verfahren die Schritte umfasst:
- Bereitstellen einer automatisierten Transportlinie (100), umfassend einen automatischen Förderer, der eine Transportfläche definiert, auf welcher der Träger (20) der biologischen Probe transportiert wird, um den die biologische Probe aufnehmenden Träger (20) in Richtung eines Bilderfassungssystems (4) zu fördern, das einen optischen Detektor (5) umfasst,
- Erfassen mindestens eines Bildes der biologischen Probe mittels des optischen Detektors (5),
- Senden eines ersten Signals (S1), das von dem optischen Detektor (5) emittiert wird und das erfasste Bild der biologischen Probe anzeigt, an eine elektronische Verarbeitungseinheit (7), die dem Bilderfassungssystem (4) zugeordnet ist und ausgebildet ist, ein zweites Signal (S2) auf der Grundlage des ersten Signals (S1) zu emittieren, und
- Senden des zweiten Signals (S2), das von der elektronischen Verarbeitungseinheit (7) emittiert wird, zu einer elektronischen Steuerung (E),
wobei:
- das Verfahren ferner den Schritt eines Bereitstellens einer Bedienvorrichtung (9) umfasst, die dem Bilderfassungssystems (4) nachgeordnet angeordnet ist, zu welcher der die biologische Probe aufnehmende Träger (20) mittels der Transportlinie (100) gefördert wird, wobei die Bedienvorrichtung (9) mindestens einen Bedienkopf (90) umfasst, der sowohl entlang einer xy-Ebene parallel zu der Transportfläche des automatischen Förderers als auch entlang einer zu der Transportfläche des automatischen Förderers senkrechen z-Achse in einer kontrollierten Weise bewegbar ist,
- wobei die dem Bilderfassungssystem (4) zugeordnete elektronische Verarbeitungseinheit (7) so programmiert ist, dass das zweite Signal (S2) die räumliche Position mindestens eines Teils des Blocks aus Einschlussmaterial (2) anzeigt, wo kein biologisches Gewebe (3) vorhanden ist, und
- wobei die elektronische Steuerung (E) ausgebildet und programmiert ist, die Bedienvorrichtung (9) auf der Grundlage des zweiten Signals (S2) zu steuern, das von der elektronischen Verarbeitungseinheit (7) stammt, um den zumindest einen Bedienkopf (90) in Übereinstimmung mit dem Teils des Blocks aus Einschlussmaterial (2) zu positionieren, wo kein biologisches Gewebe (3) vorhanden ist, und um anschließend den Bedienkopf (90) zu veranlassen, die folgenden Operationen in dieser Reihenfolge durchzuführen:
(a) Entfernen eines vordefinierten Volumens des Blocks aus Einschlussmaterial (2) in Übereinstimmung mit dem Teil, und
(b) Einfügen mindestens eines Referenzmaterials (10) anstelle des Volumens des Blocks aus Einschlussmaterial (2), welches entfernt wurde.

8. Verfahren nach Anspruch 7, **dadurch gekennzeichnet, dass** es ferner die folgenden Schritte umfasst:
- Teilen der biologischen Probe, in die das mindestens eine Referenzmaterial (10) eingebracht wurde, in mindestens zwei Teile der biologischen Probe mittels eines Mikrotoms, das der Bedienvorrichtung (9) nachgeordnet angeordnet ist, und
- Anordnen mindestens eines Teils einer biologischen Probe, die mittels des Mikrotoms erhalten wird, auf einem Laborobjektträger (12).

9. Verfahren nach Anspruch 8, **dadurch gekennzeichnet, dass** es ferner die folgenden Schritte umfasst:
- Positionieren des Laborobjektträgers (12), auf dem der mindestens eine Teil der biologischen Probe angeordnet ist, in Übereinstimmung mit einem zweiten Bilderfassungssystem (14), das dem Mikrotom nachgeordnet angeordnet ist und einen zweiten optischen Detektor (15) umfasst,
- Erfassen mindestens eines Bildes des mindestens einen Teils der biologischen Probe mittels des zweiten optischen Detektors (15),
- Senden eines dritten Signals (S3), das durch den zweiten optischen Detektor (15) emittiert wird und das Bild des mindestens einen Teils der erfassten biologischen Probe anzeigt, an eine zweite elektronischen Verarbeitungseinheit (17), die dem zweiten Bilderfassungssystem (14) zugeordnet ist,
- Entfernen des Blocks aus Einschlussmaterial (2) und gegebenenfalls auch das mindestens eine Referenzmaterial (10) aus dem mindestens einen Teil der biologischen Probe, die auf dem Laborobjektträger (12) während der Verarbeitung angeordnet wird, die zum Durchführen eines Färbens des biologischen Gewebes (3) erforderlich ist, um den Teil aus nur biologischem Gewebe (3) auf dem Laborobjektträger (12) zu hinterlassen,
- Repositionieren des Laborobjektträgers (12), auf dem der Teil aus nur biologischem Gewebe (3) angeordnet ist, in Übereinstimmung mit dem zweiten Bilderfassungssystem (14), das dem Mikrotom nachgeordnet angeordnet ist,
- Aufnehmen mindestens eines Bildes des Teils aus nur biologischem Gewebe (3) mittels des zweiten optischen Detektors (15),
- Senden eines vierten Signals (S4), das von dem zweiten optischen Detektor (15) emittiert wird und das erfasste Bild des Teils aus nur biologischem Gewebe (3) anzeigt, zu der zweiten elektronischen Verarbeitungseinheit (17), die dem zweiten Bilderfassungssystem (14) zugeordnet ist,
- Verarbeiten und Integrieren der erfassten Signale (S3, S4), um die virtuelle Position (10') des Referenzmaterials (10) auf dem Bild des Teils aus nur biologischem Gewebe (3) zu identifizieren, wobei das Bild des Teils der biologischen Probe mit dem Bild des Teils aus nur biologischem Gewebe (3) überlappt.

10. Verfahren nach Anspruch 7, **dadurch gekennzeichnet, dass** der Block aus Einschlussmaterial (2) ein Paraffinblock ist.

11. Verfahren nach Anspruch 7, **dadurch gekennzeichnet, dass** das mindestens eine Referenzmaterial (10) ausgewählt ist aus Kompositen auf Basis von Mikropartikeln/Nanopartikeln aus Bariumtitanat, Zinkoxid, Nanoclays, Zellulose-Nanofibrillen und anderen Partikeln, die für einen ausreichende optischer Kontrast zwischen dem Referenzmaterial (10) und dem Block aus Einschlussmaterial (2) sorgen, natürlichen oder synthetischen Polymeren wie Agarose, Chitosan, Gellangummi, Polyacrylamid, Polyurethan, Bienenwachs, Candelillawachs und Paraffin mit zugesetztem Farbstoff.

## Revendications

1. Dispositif (1) de traitement d'un échantillon biologique reçu sur un support (20), dans lequel ledit échantillon biologique comprend au moins un tissu biologique (3) inclus dans un bloc de matériau de confinement (2), ledit dispositif (1) comprenant :
- un système d'acquisition d'images (4) comprenant un détecteur optique (5) pour acquérir au moins une image dudit échantillon biologique,
- une ligne de transport automatisée (100) comprenant un transporteur automatique définissant une surface de transport sur laquelle est transporté le support (20) de l'échantillon biologique, afin de faire avancer ledit support (20) recevant l'échantillon biologique vers ledit système d'acquisition d'images (4),
- une unité de traitement électronique (7) associée audit système d'acquisition d'images (4) et programmée pour recevoir et traiter un premier signal (S1) émis par ledit détecteur optique (5) et indicatif de l'image d'échantillon biologique acquise, et
- un dispositif de commande électronique (E) configuré pour recevoir un deuxième signal (S2) émis par ladite unité de traitement électronique (7),
dans lequel :
- le dispositif (1) comprend en outre un appareil actionneur (9) placé en aval dudit système d'acquisition d'images (4), vers lequel ledit support (20) recevant l'échantillon biologique est avancé au moyen de ladite ligne de transport, ledit appareil actionneur (9) comprenant au moins une tête opérationnelle (90) qui peut être déplacée de manière contrôlée à la fois le long d'un plan xy parallèle à ladite surface de transport du transporteur automatique, et le long d'un axe z perpendiculaire à ladite surface de transport du transporteur automatique,
- l'unité de traitement électronique (7) associée audit système d'acquisition d'images (4) est programmée de sorte que ledit deuxième signal (S2) soit indicatif de la position dans l'espace d'au moins une partie dudit bloc de matériau de confinement (2) où il n'y a pas de tissu biologique (3), et
- ledit dispositif de commande électronique (E) est configuré et programmé pour commander ledit appareil actionneur (9) sur la base dudit deuxième signal (S2) provenant de ladite unité de traitement électronique (7) pour positionner l'au moins une tête opérationnelle (90) en correspondance avec ladite partie du bloc de matériau de confinement (2) lorsqu'il n'y a pas de tissu biologique (3) et ensuite pour amener ladite tête opérationnelle (90) à effectuer les opérations suivantes dans cet ordre :
(a) le retrait d'un volume prédéfini du bloc de matériau de confinement (2) en correspondance avec ladite partie, et
(b) l'insertion d'au moins un matériau de référence (10) en remplacement dudit volume du bloc de matériau de confinement (2) qui a été retiré.

2. Dispositif (1) selon la revendication 1, **caractérisé en ce que** le dispositif (1) comprend en outre un microtome placé en aval dudit appareil actionneur (9) et apte à diviser l'échantillon biologique dans lequel l'au moins un matériau de référence (10) a été inséré en au moins deux sections d'échantillon biologique.

3. Dispositif (1) selon la revendication 2, **caractérisé en ce qu'**il comprend en outre :
- un deuxième système d'acquisition d'images (14) placé en aval dudit microtome et apte à acquérir au moins une image d'au moins une section d'échantillon biologique obtenue au moyen dudit microtome, dans lequel la section d'échantillon biologique est placée sur une lame de laboratoire (12), ledit deuxième système d'acquisition d'images (14) comprenant un deuxième détecteur optique (15) apte à acquérir à la fois au moins une image de ladite au moins une section d'échantillon biologique, comprenant le tissu biologique (3), le matériau de référence (10) et le matériau de confinement (2), et au moins une image de la même section de tissu biologique (3) uniquement, après un retrait du matériau de confinement (2) et également éventuellement du matériau de référence (10),
- une deuxième unité de traitement électronique (17), associée audit deuxième système d'acquisition d'images (14) et programmée pour recevoir et traiter au moins un troisième signal (S3) émis par ledit deuxième détecteur optique (15) et indicatif de l'image acquise de la section d'échantillon biologique et au moins un quatrième signal (S4) indicatif de l'image acquise de la section de tissu biologique (3) uniquement.

4. Dispositif (1) selon la revendication 1, **caractérisé en ce que** le bloc de matériau de confinement (2) est un bloc de paraffine.

5. Dispositif (1) selon la revendication 1, **caractérisé en ce que** l'au moins un matériau de référence (10) est choisi parmi des composites à base de microparticules/nanoparticules de titanate de baryum, d'oxyde de zinc, de nanoargiles, de nanofibrilles de cellulose et d'autres particules qui garantissent un contraste optique suffisant entre le matériau de référence (10) et le bloc de matériau de confinement (2), des polymères naturels ou synthétiques, tels que l'agarose, le chitosane, la gomme gellane, le polyacrylamide, le polyuréthane, la cire d'abeille, la cire de candelilla et la paraffine avec un colorant ajouté.

6. Dispositif (1) selon la revendication 1, **caractérisé en ce que** ledit système d'acquisition d'images (4) comprend en outre un illuminateur (6) et au moins un miroir orienté de manière à permettre l'acquisition par ledit système d'acquisition d'images (4) d'un code d'identification présent sur ledit support (20).

7. Procédé de traitement d'un échantillon biologique reçu sur un support (20), dans lequel ledit échantillon biologique comprend au moins un tissu biologique (3) inclus dans un bloc de matériau de confinement (2), ledit procédé comprenant les étapes de :
- fourniture d'une ligne de transport automatisée (100) comprenant un transporteur automatique définissant une surface de transport sur laquelle est transporté le support (20) de l'échantillon biologique, afin de faire avancer ledit support (20) recevant ledit échantillon biologique vers un système d'acquisition d'images (4) comprenant un détecteur optique (5),
- acquisition d'au moins une image dudit échantillon biologique au moyen dudit détecteur optique (5),
- envoi d'un premier signal (S1) émis par ledit détecteur optique (5) et indicatif de l'image d'échantillon biologique acquise à une unité de traitement électronique (7) associée audit système d'acquisition d'images (4) et configurée pour émettre un deuxième signal (S2) sur la base dudit premier signal (S1), et
- envoi du deuxième signal (S2) émis par ladite unité de traitement électronique (7) à un dispositif de commande électronique (E),
dans lequel :
- le procédé comprend en outre l'étape de fourniture d'un appareil actionneur (9) placé en aval dudit système d'acquisition d'images (4), vers lequel ledit support (20) recevant l'échantillon biologique est avancé au moyen de ladite ligne de transport (100), ledit appareil actionneur (9) comprenant au moins une tête opérationnelle (90) qui peut être déplacée de manière contrôlée à la fois le long d'un plan xy parallèle à ladite surface de transport du transporteur automatique, et le long d'un axe z perpendiculaire à ladite surface de transport du transporteur automatique,
- l'unité de traitement électronique (7) associée audit système d'acquisition d'images (4) est programmée de sorte que ledit deuxième signal (S2) soit indicatif de la position dans l'espace d'au moins une partie dudit bloc de matériau de confinement (2) où il n'y a pas de tissu biologique (3),
- ledit dispositif de commande électronique (E) commande ledit appareil actionneur (9) sur la base dudit deuxième signal (S2) provenant de ladite unité de traitement électronique (7) pour positionner l'au moins une tête opérationnelle (90) en correspondance avec ladite partie du bloc de matériau de confinement (2) où il n'y a pas de tissu biologique (3) et ensuite pour amener ladite tête opérationnelle (90) à effectuer les opérations suivantes dans cet ordre :
(a) le retrait d'un volume prédéfini du bloc de matériau de confinement (2) en correspondance avec ladite partie, et
(b) l'insertion d'au moins un matériau de référence (10) en remplacement dudit volume du bloc de matériau de confinement (2) qui a été retiré.

8. Procédé selon la revendication 7, **caractérisé en ce qu'**il comprend en outre les étapes de :
- division de l'échantillon biologique dans lequel l'au moins un matériau de référence (10) a été inséré en au moins deux sections d'échantillon biologique au moyen d'un microtome placé en aval dudit appareil actionneur (9), et
- mise en place d'au moins une section d'échantillon biologique obtenue au moyen dudit microtome sur une lame de laboratoire (12).

9. Procédé selon la revendication 8, **caractérisé en ce qu'**il comprend en outre les étapes de :
- positionnement de ladite lame de laboratoire (12) sur laquelle l'au moins une section d'échantillon biologique est placée, en correspondance avec un deuxième système d'acquisition d'images (14) placé en aval dudit microtome et comprenant un deuxième détecteur optique (15),
- acquisition d'au moins une image de ladite au moins une section d'échantillon biologique au moyen dudit deuxième détecteur optique (15),
- envoi d'un troisième signal (S3) émis par ledit deuxième détecteur optique (15) et indicatif de l'image de ladite au moins une section d'échantillon biologique acquise à une deuxième unité de traitement électronique (17) associée audit deuxième système d'acquisition d'images (14),
- retrait du bloc de matériau de confinement (2) et également éventuellement de l'au moins un matériau de référence (10) de l'au moins une section d'échantillon biologique placée sur ladite lame de laboratoire (12) lors du traitement nécessaire pour effectuer une coloration du tissu biologique (3), de manière à laisser la section de tissu biologique (3) uniquement positionnée sur ladite lame de laboratoire (12),
- repositionnement de ladite lame de laboratoire (12) sur laquelle ladite section de tissu biologique (3) uniquement est placée en correspondance avec ledit deuxième système d'acquisition d'images (14) placé en aval dudit microtome,
- acquisition d'au moins une image de ladite section de tissu biologique (3) uniquement au moyen dudit deuxième détecteur optique (15),
- envoi d'un quatrième signal (S4) émis par ledit deuxième détecteur optique (15) et indicatif de l'image de ladite section de tissu biologique (3) uniquement acquise à ladite deuxième unité de traitement électronique (17) associée au deuxième système d'acquisition d'images (14),
- traitement et intégration des signaux acquis (S3, S4) afin d'identifier la position virtuelle (10') du matériau de référence (10) sur l'image de ladite section de tissu biologique (3) uniquement, par chevauchement de l'image de la section d'échantillon biologique avec l'image de la section de tissu biologique (3) uniquement.

10. Procédé selon la revendication 7, **caractérisé en ce que** le bloc de matériau de confinement (2) est un bloc de paraffine.

11. Procédé selon la revendication 7, **caractérisé en ce que** ledit au moins un matériau de référence (10) est choisi parmi des composites à base de microparticules/nanoparticules de titanate de baryum, d'oxyde de zinc, de nanoargiles, de nanofibrilles de cellulose et d'autres particules qui garantissent un contraste optique suffisant entre le matériau de référence (10) et le bloc de matériau de confinement (2), des polymères naturels ou synthétiques, tels que l'agarose, le chitosane, la gomme gellane, le polyacrylamide, le polyuréthane, la cire d'abeille, la cire de candelilla et la paraffine avec un colorant ajouté.
